# EUROPÄISCHE PATENTSCHRIFT

(11) **EP 0 615 615 B1**
(45) Veröffentlichungstag und Bekanntmachung des Hinweises auf die Patenterteilung: **13.12.1995**
(21) Anmeldenummer: 93911640.6
(22) Anmeldetag: 14.10.1992
(51) Int. Cl.: G01M 3/20

(54) **LECKSUCHER FÜR VAKUUMANLAGEN SOWIE VERFAHREN ZUR DURCHFÜHRUNG DER LECKSUCHE AN VAKUUMANLAGEN**
LEAK INDICATOR FOR VACUUM SYSTEMS AND A METHOD OF SEARCHING FOR LEAKS IN VACUUM SYSTEMS
DETECTEUR DE FUITES POUR INSTALLATIONS A VIDE, ET PROCEDE DE RECHERCHE DE FUITES DANS DES INSTALLATIONS A VIDE

(30) Priorität: 07.12.1991 DE 4140366
(43) Veröffentlichungstag der Anmeldung: 21.09.1994
(73) Patentinhaber: Balzers und Leybold Deutschland Holding Aktiengesellschaft, 63450 Hanau (DE)
(72) Erfinder: GROSSE BLEY, Werner, D-5300 Bonn 1 (DE)
(74) Vertreter: Leineweber, Jürgen, Dipl.-Phys.
(86) Internationale Anmeldenummer: EP9202364
(87) Internationale Veröffentlichungsnummer: WO9312411

(56) Entgegenhaltungen:
- EP-A- 0 268 777
- EP-A- 0 283 543
- EP-A- 0 444 434
- DE-A- 2 713 580
- DE-A- 3 316 765

## Beschreibung

Die Erfindung betrifft einen Lecksucher für Vakuumanlagen, welche eine während des Betriebs der Anlage unter Vakuum stehende Kammer sowie eine der Evakuierung der Kammer dienende Vakuumpumpe umfassen, wobei der Lecksucher einen als Massenspektrometer ausgebildeten Testgasdetektor sowie eine Hochvakuumpumpe zur Erzeugung des für den Betrieb des Massenspektrometers erforderlichen Druckes aufweist.

Vakuumanlagen müssen zu Beginn ihres Betriebs, nach Wartungs- oder Reparaturarbeiten und auch nach anderen Betriebsunterbrechungen immer wieder auf Dichtheit geprüft werden, um einen optimalen, nicht durch Leckgasströme gestörten Betriebsablauf sicherzustellen.

Aus der DE-OS 33 16 765 sind ein Verfahren und eine Vorrichtung zur Lecksuche an Turbinengehäusen bekannt. Im Turbinengehäuse wird mit Hilfe von Vakuumpumpen ein Unterdruck aufrechterhalten. Zur Lecksuche werden die leckverdächtigen Stellen des Turbinengehäuses von außen mit einem Testgas, vorzugsweise Helium, besprüht. Zur Feststellung eventuell vorhandener Lecks wird das Abgas der Vakuumpumpen mit Hilfe eines Schnüffel-Lecksuchers überwacht. Eine Lecksuche dieser Art ist relativ unempfindlich.

Außerdem ist eine Lecksuchanordnung für diese Aufgabe relativ groß und schwer, da sie ein vollständiges Hochvakuumpumpsystem mit schwerer Vorvakuumpumpe enthalten muß.

Der vorliegenden Erfindung liegt die Aufgabe zugrunde, die Lecksuche an Vakuumanlagen bei reduziertem technischen Aufwand empfindlicher durchführen zu können.

Erfindungsgemäß wird diese Aufgabe bei einem Lecksucher der eingangs erwähnten Art durch die Merkmale des Patentanspruchs 1 gelöst.

Durch die - entsprechend bemessene - Drossel ist sichergestellt, daß der Druck im Massenspektrometer ausreichend niedrig bleibt. Aufgrund der unmittelbaren Verbindung zwischen der Kammer der Vakuumanlage und dem Lecksucher sind die Strömungswege des Testgases zwischen einem eventuell vorhandenen Leck und dem Massenspektrometer-Detektor wesentlich kürzer als beim Stand der Technik, was den Vorteil einer Verbesserung der Empfindlichkeit und einer Reduzierung des Aufwandes zur Folge hat.

Eine besonders vorteilhafte Weiterbildung besteht darin, daß die Drossel als Regelventil ausgebildet ist. Mit Hilfe dieses Regelventiles kann das zum Massenspektrometer-Detektor strömende Gas derart gedrosselt werden, daß der Druck im Massenspektrometer-Detektor unabhängig vom Prozeßdruck in der Anlage konstant gehalten werden kann, und zwar vorzugsweise auf einem optimal hohen Totaldruck von etwa 10⁻⁴ mbar. Bei einer derartigen Betriebsart arbeitet der Lecksucher als Konzentrationsmeßgerät für das Testgas, so daß dem Prozeßverantwortlichen unmittelbar die störende Gaskonzentration in seinem Prozeß angezeigt wird. Konzentrationsveränderungen werden dabei unabhängig von Totaldruckschwankungen im Prozeß richtig gemessen, auch wenn die Leckagerate selbst konstant bleibt (die Leckagerate ist nur die verursachende Größe der Gaskonzentration, die den Prozeß stört).

Eine weitere vorteilhafte Maßnahme besteht darin, im Lecksucher ein Pumpensystem einzusetzen, das aus einer Hochvakuumpumpe und einer weiteren Pumpenstufe besteht, so daß auf der Druckseite des Pumpensystems ein Druck erzeugt werden kann, der in der Größenordnung des Betriebsdruckes in der Kammer der Vakuumanlage liegt, beispielsweise etwa 40 mbar. Bei einem derartigen Pumpensystem besteht die Möglichkeit, den Auslaß des Pumpensystems mit der Kammer der Vakuumanlage zu verbinden, so daß es nicht mehr erforderlich ist, den Lecksucher selbst mit einer Vorvakuumpumpe auszurüsten. Der Lecksucher wird dadurch leicht und besonders handlich, was speziell bei der Lecksuche an großen, stationären Anlagen wichtig ist.

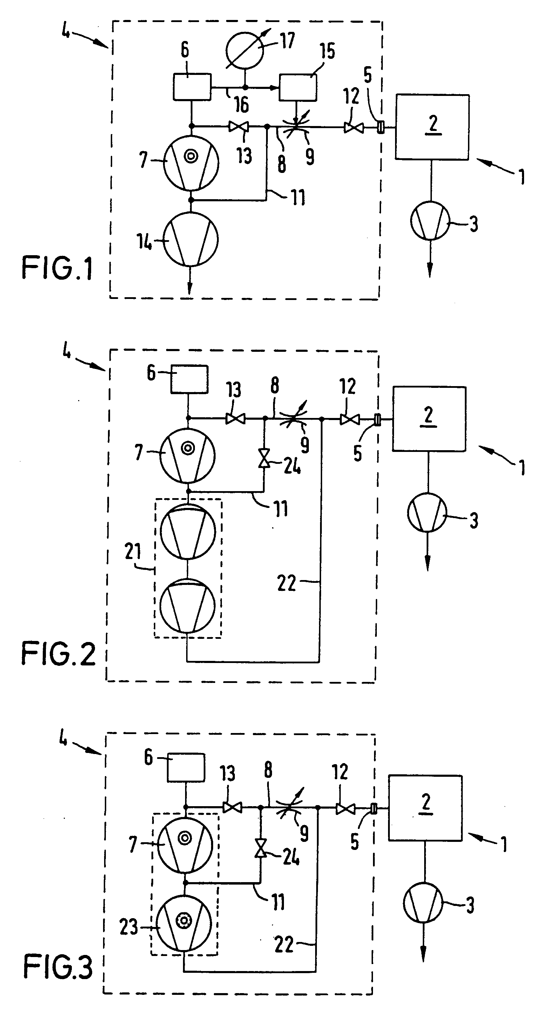

Weitere Vorteile und Einzelheiten der Erfindung sollen anhand von in den Figuren 1 bis 3 dargestellten Ausführungsbeispielen erläutert werden.

In den Figuren ist die auf Lecks zu untersuchende Vakuumanlage mit 1, ihre Vakuumkammer mit 2 und die zur Vakuumanlage 1 gehörende Vorvakuumpumpe mit 3 bezeichnet.

Der generell mit 4 bezeichnete Lecksucher ist über die Flanschverbindung 5 unmittelbar mit der Kammer 2 verbindbar. Er umfaßt den Massenspektrometer-Detektor 6 und die Hochvakuumpumpe 7, die vorzugsweise als Turbomolekularvakuumpumpe ausgebildet ist. Über die Leitung 8 mit der Drossel 9 kann die Kammer 2 unmittelbar mit der Einlaßseite der Hochvakuumpumpe, also unmittelbar mit dem Detektor 6, verbunden werden. Von der Leitung 8 zweigt sich - in Strömungsrichtung des ggf. von der Kammer 2 zum Massenspektrometer-Detektor 6 strömenden Testgases - hinter der Drossel 9 eine Leitung 11 ab, die zur Auslaßseite der Hochvakuumpumpe führt, so daß die Kammer 2 der Vakuumanlage 1 über die Drossel 9 auch mit dieser Stelle im Lecksucher 4 verbunden werden kann. Schaltventile 12 und 13 steuern den gewünschten Gasstrom.

Beim Ausführungsbeispiel nach Figur 1 schließt sich an die Hochvakuumpumpe 7 eine übliche Vorvakuumpumpe 14 an. Die Lecksuche erfolgt in der Weise, daß die Kammer 2 der Vakuumanlage 1 von außen mit Testgas besprüht wird. Zur Feststellung, ob ein relativ grobes Leck vorhanden ist, wird zunächst über die Drossel 9 die Verbindung zwischen der Kammer 2 und der Auslaßseite der Hochvakuumpumpe 7 hergestellt (Ventil 12 offen, Ventil 13 geschlossen). Gegebenenfalls durch diesen Leitungsweg strömendes Testgas gelangt entgegen der Pumprichtung der Hochvakuumpumpe 7 in das Massenspektrometer 6, das mit im einzelnen nicht dargestellten Anzeigevorrichtungen verbunden ist. Eine Steigerung der Empfindlichkeit der Lecksuche ist dadurch möglich, daß das Ventil 13 geöffnet wird, so daß Testgas unmittelbar zum Detektor 6 gelangen kann.

Die Drossel 9 muß derart bemessen sein, daß der für den Betrieb des Massenspektrometers 6 erforderliche Druck nicht überschritten wird. Besonders zweckmäßig ist es, wenn die Drossel 9 als Regelventil ausgebildet ist und derart in Abhängigkeit vom Druck im Massenspektrometer 6 gesteuert wird, daß dieser Druck konstant bleibt. Bei dieser Betriebsart arbeitet der Lecksucher als Konzentrationsmeßgerät, während er bei fester Drossel oder fest eingestelltem Regelventil 9 die Funktion eines Leckratenmeßgerätes hat. Nur in Figur 1 sind schematisch Mittel zur Steuerung des Regelventils 9 dargestellt. Sie umfassen die als Block dargestellte Steuereinrichtung 15, der über die Leitung 16 die notwendige Information über den Druck im Massenspektrometer-Detektor 6 zugeführt wird. Mit 17 ist ein Druckmeßgerät bezeichnet, das den Druck im Detektor 6 anzeigt. Ein Anstieg des Druckes in der Kammer 2 hat bei fest eingestellter Drossel 9 einen Druckanstieg im Detektor 6 zur Folge. Die dargestellte Regelung bewirkt bei einem Anstieg des Druckes in der Kammer 2 eine stärkere Drosselwirkung des Regelventiles 9, und zwar derart, daß der Druck im Detektor 6 konstant bleibt.

Beim Ausführungsbeispiel nach Figur 2 schließt sich an die Hochvakuumpumpe 7 eine Membranvakuumpumpe 21 an, welche zweistufig ausgebildet ist. Sie ist zweckmäßig so ausgebildet, daß sie - ausgehend von einem Einlaßdruck von etwa 0,1 mbar - in der Lage ist, einen Auslaßdruck von etwa 40 bis 100 mbar zu erzeugen. In diesem Fall besteht die Möglichkeit, die Auslaßleitung 22 mit der Kammer 2 zu verbinden, so daß im Lecksucher 4 auf eine gegen Atmosphärendruck verdichtende Vorvakuumpumpe verzichtet werden kann. Um zwei Verbindungsleitungen zwischen der Kammer 2 und dem Lecksucher 4 zu vermeiden, führt die Leitung 22 innerhalb des Lecksuchers 4 in die Leitung 8, und zwar zwischen dem Einlaßventil 12 und der Drossel 9.

Beim Ausführungsbeispiel nach Figur 3 ist die sich an die Hochvakuumpumpe 7 anschließende Pumpe als Gewinde- bzw. Molekularvakuumpumpenstufe 23 ausgebildet. Kombiniert Turbomolekular-/Molekularvakuumpumpen, deren Rotoren auf einer Welle angeordnet sind, sind inzwischen bekannt und haben ebenfalls die zum Ausführungsbeispiel nach Figur 2 beschriebene Vorvakuumbeständigkeit, so daß es ebenfalls möglich ist, die Auslaßleitung 22 zur Kammer 2 zurückzuführen und damit auf eine separate Vorvakuumpumpe im Lecksucher 4 verzichten zu können.

Mit den Ausführungen nach den Figuren 2 und 3 kann die Lecksuche an der Anlage 1 mit drei Empfindlichkeitsstufen ausgeführt werden. Voraussetzung ist dabei, daß auch die Leitung 11 mit einem Ventil 24 ausgerüstet ist. Bei einer Lecksuche nach besonders groben Lecks sind die Ventile 13 und 24 geschlossen, so daß eventuell in die Kammer 2 eindringendes Testgas nur über die Leitungen 22 und entgegen der Pumprichtung der Pumpenstufen 7, 21 bzw. 7, 23 zum Detektor 6 gelangen kann. Zum Zwecke der Erhöhung der Empfindlichkeit kann danach zunächst das Ventil 24 und dann das Ventil 13 geöffnet werden.

## Patentansprüche

1. Lecksucher (4) für Vakuumanlagen (1), welche eine während des Betriebs der Anlage unter Vakuum stehende Kammer (2) sowie eine der Evakuierung der Kammer dienende Vakuumpumpe (3) umfassen, wobei der Lecksucher (4) einen als Massenspektrometer ausgebildeten Testgasdetektor (6) sowie eine Hochvakuumpumpe (7) zur Erzeugung des für den Betrieb des Massenspektrometers erforderlichen Druckes aufweist, dadurch gekennzeichnet, daß im Lecksucher (4) eine Leitung (8) vorgesehen ist, die von einer Flanschverbindung (5) für den Anschluß der Kammer (2) an den Lecksucher (4) zur Einlaßseite der Hochvakuumpumpe (7) führt, daß die Leitung (8) mit einer Drossel (9) sowie - zwischen Drossel (9) und Einlaßseite der Hochvakuumpumpe (7) - mit einem Ventil (13) ausgerüstet ist und daß an die Leitung (8) zwischen der Drossel (9) und dem Ventil (13) eine zur Auslaßseite der Hochvakuumpumpe (7) führende Leitung (11) angeschlossen ist, so daß zur Durchführung einer Lecksuche die Kammer (2) über die Drossel (9) wahlweise
- nur mit der Auslaßseite der Hochvakuumpumpe (7) oder
- gemeinsam mit der Auslaßseite und der Einlaßseite der Hochvakuumpumpe (7)
verbindbar ist.

2. Lecksucher (4) nach Anspruch 1, dadurch gekennzeichnet, daß die Drossel (9) ein Regelventil ist.

3. Lecksucher (4) nach Anspruch 1 oder 2, dadurch gekennzeichnet, daß die Hochvakuumpumpe (7) Bestandteil eines Pumpensystems (7, 21 bzw. 7, 23) ist, das auf der Druckseite einen Druck erzeugt, der in der Größenordnung des Betriebsdrucks in der Kammer (2) der Vakuumanlage (1) liegt.

4. Lecksucher (4) nach Anspruch 3, dadurch gekennzeichnet, daß der Auslaß des Pumpensystems (7, 21 bzw. 7, 23) über eine Leitung (22) mit der Flanschverbindung (5) für den Anschluß der Kammer (2) verbunden ist.

5. Lecksucher (4) nach Anspruch 3 oder 4, dadurch gekennzeichnet, daß das Pumpensystem eine kombinierte Turbomolekular/ Molekular-Vakuumpumpe (7, 23) ist.

6. Lecksucher (4) nach Anspruch 3 oder 4, dadurch gekennzeichnet, daß das Pumpensystem aus einer Hochvakuumpumpe (7) und mindestens einer der Hochvakuumpumpe nachgeordneten Membranpumpe (21) besteht.

7. Verfahren zur Lecksuche an einer Vakuumanlage (1), bei dem leckverdächtige Stellen der Anlage von außen mit einem Testgas, vorzugsweise Helium, besprüht werden, mit Hilfe eines Lecksuchers (4) nach Anspruch 2, dadurch gekennzeichnet, daß das zum Massenspektrometer-Detektor (6) strömende Gas mit Hilfe des Regelventiles (9) derart gedrosselt wird, daß der Druck im Massenspektrometer-Detektor (6) konstant bleibt.

## Claims

1. Leak indicator (4) for vacuum systems (1) which comprise a chamber (2) that is under vacuum during the operation of the system and also a vacuum pump (3) that serves to evacuate the chamber, the leak indicator (4) having a test-gas detector (6) taking the form of a mass spectrometer and also a high-vacuum pump (7) for generating the necessary pressure for the operation of the mass spectrometer, characterised in that a line (8) is provided in the leak indicator (4) which leads from a flange connection (5) for connecting the chamber (2) with the leak indicator (4) to the inlet side of the high-vacuum pump (7), in that the line (8) is equipped with a throttle (9) and also - between throttle (9) and inlet side of the high-vacuum pump (7) - with a valve (13) and in that a line (11) leading to the outlet side of the high-vacuum pump (7) is connected to the line (8) between the throttle (9) and the valve (13) so that in order to carry out a test for leaks the chamber (2) is optionally capable of being connected via the throttle (9)
- to the outlet side of the high-vacuum pump (7) only or
- jointly to the outlet side and the inlet side of the high-vacuum pump (7).

2. Leak indicator (4) according to Claim 1, characterised in that the throttle (9) is a control valve.

3. Leak indicator (4) according to Claim 1 or 2, characterised in that the high-vacuum pump (7) is a component of a pump system (7, 21 or 7, 23) which generates a pressure on the pressure side that is of the order of magnitude of the operating pressure in the chamber (2) of the vacuum system (1).

4. Leak indicator (4) according to Claim 3, characterised in that the outlet of the pump system (7, 21 or 7, 23) is connected via a line (22) to the flange connection (5) for the connection of the chamber (2).

5. Leak indicator (4) according to Claim 3 or 4, characterised in that the pump system is a combined turbomolecular/molecular vacuum pump (7, 23).

6. Leak indicator (4) according to Claim 3 or 4, characterised in that the pump system consists of a high-vacuum pump (7) and at least one membrane pump (21) arranged downstream of the high-vacuum pump.

7. Process for searching for leaks in a vacuum system (1), in which points in the system that are suspected of leaking are sprayed from outside with a test gas, preferably helium, implemented with the aid of a leak indicator (4) according to Claim 2, characterised in that the gas flowing to the mass-spectrometer detector (6) is throttled with the aid of the control valve (9) in such a way that the pressure in the mass-spectrometer detector (6) remains constant.

## Revendications

1. Détecteur de fuites (4) pour installations sous vide (1) qui comportent une chambre (2) mise sous vide pendant l'exploitation de l'installation, ainsi qu'une pompe à vide (3) servant à la mise de la chambre sous vide, le détecteur de fuites (4) présentant un détecteur de gaz de test (6) conçu en tant que spectromètre de masse ainsi qu'une pompe à haut vide (7) pour produire la pression nécessaire pour l'utilisation du spectromètre de masse, caractérisé par le fait que dans le détecteur de fluides (4) est prévue une conduite (8) qui va, d'une liaison à bride (5) pour le raccordement de la chambre (2) au détecteur de fuites (4), au côté sortie de la pompe à haut vide (7), que la conduite (8) est équipée d'un étrangleur (9) ainsi que - entre l'étrangleur (9) et le côté entrée de la pompe à haut vide (7), d'une vanne (13) et qu'à la conduite (8) se raccorde, entre l'étrangleur (9) et la vanne (13), une conduite (11) qui conduit au côté sortie de la pompe à haut vide (7), de sorte que pour procéder à une recherche de fuite, on peut relier la chambre (2), en passant par l'étrangleur (9), au choix
- uniquement avec le côté sortie de la pompe à haut vide (7) soit
- en commun avec le côté sortie et le côté entrée de la pompe à haut vide (7).

2. Détecteur de fuites (4) selon la revendication 1, caractérisé par le fait que l'étrangleur (9) est une vanne de régulation.

3. Détecteur de fuites (4) selon la revendication 1 ou 2, caractérisé par le fait que la pompe à haut vide (7) est un composant d'un système de pompes (7, 21 ou 7, 23) qui produit du côté refoulement une pression qui se situe dans l'ordre de grandeur de la pression d'exploitation régnant dans la chambre (2) de l'installation sous vide (1).

4. Détecteur de fuites selon la revendication 3, caractérisé par le fait que la sortie du système de pompes (7, 21 ou 7, 23) est relié, par l'intermédiaire d'une conduite (22), avec la liaison à bride (5) prévue pour le raccordement de la chambre (2).

5. Détecteur de fuites (4) selon la revendication 3 ou 4, caractérisé par le fait que le système de pompes est une pompe à vide combinée turbo-moléculaire/moléculaire (7, 23).

6. Détecteur de fuites (4) selon la revendication 3 ou 4, caractérisé par le fait que le système de pompes est constitué d'une pompe à haut vide (7) et d'au moins une pompe à membrane (21) placée en aval de la pompe à haut vide.

7. Procédé de recherche de fuites sur une installation sous vide (1) dans le cas duquel on vaporise un gaz de test, de préférence de l'hélium, de l'extérieur, sur les endroits de l'installation que l'on soupçonne de fuite, avec l'aide d'un détecteur de fuites (4) selon la revendication 2, caractérisé par le fait que le gaz qui s'écoule en direction du détecteur - spectromètre de masse (6) est, à l'aide de la vanne de régulation (9), étranglé de façon que la pression dans le détecteur - spectromètre de masse (6) reste constante.
